# EUROPEAN PATENT SPECIFICATION

(11) **EP 2 781 146 B1**
(45) Date of publication and mention of the grant of the patent: **20.07.2016**
(21) Application number: 14160506.3
(22) Date of filing: 18.03.2014
(51) Int. Cl.: A01C 3/02

(54) **Tarpaulin with insulating lining**
Plane mit isolierender Auskleidung
Bâche avec garniture isolante

(30) Priority: 22.03.2013 DK 201300044 U
(43) Date of publication of application: 24.09.2014
(73) Proprietor: Stabell Presenninger ApS, 8270 Hojbjerg (DK)
(72) Inventor: Callesen, Kurt, 8270 Højbjerg (DK)
(74) Representative: Gregersen, Niels Henrik

(56) References cited:
- DK-U3- 200 000 332
- GB-A- 2 147 253
- US-A1- 2009 071 904

## Description

This invention concerns a tarpaulin with insulating lining. The tarpaulin is particularly developed for use in covering liquid manure tanks of the type provided with a double covering, and where the interspace between the liquid manure and the lowermost layer of cover is used as storage for accumulation of biogas. A cover to this type is known from the description of DK utility model BR 2000 00332 ("Overdækning til gylletank med anordning til opsamling af biogas" Inventor: Erik Lundsby Andreasen).

The cover according to BR 2000 00332 is constituted by an external tent-formed canvas suspended over the liquid manure tank and fastened to the edge of the tank elements all the way around the tank. The canvas is supported at the centre by a vertical upright disposed at the centre of the liquid manure tank. The upright is adapted with means for tensioning the canvas such that the cover can be tightened to a tight conical shape (tent shape).

In addition to the external canvas, the liquid manure tank is provided with an internal canvas which similarly to the external canvas is fastened to the edge of the tank all the way around the tank. The internal canvas is disposed hanging loose down over the liquid manure surface and is tightly connected with the upright such that the canvas forms a gastight reservoir between the liquid manure and the canvas. This reservoir has a variable volume. By suitable heating of the liquid manure and possibly adding waste materials (fatty waste etc.), biogas is produced in the usual way and collected in the reservoir. During the gas development the internal canvas is distended, almost like a balloon. The maximum volume in the gas reservoir is attained when the canvas lies closely against the underside of the cover. The biogas is discharged from the reservoir via a gas outlet arranged for the purpose.

The biological fermentation process in the liquid manure tank is enhanced as mentioned by supplying heat to the liquid manure. In order to reduce the loss of heat it is necessary to thermally insulate the cover. For this purpose it is necessary to use a PVC-tarpaulin with heat insulating properties.

Various forms of thermally insulating tarpaulins are known. One type, e.g. used for keeping asphalt warm on the lorries used for delivery of premixed hot asphalt to the spreading sites, consists of two layer of PVC tarpaulin which is welded or sewn together in a pattern that produces a number of closely lying, parallel channels. In these channels thermally insulating foam or fibre material, which may be e.g. polyester fibres, is embedded. The design of the tarpaulin with welding seams between the two layers of PVC tarpaulin entails, however, that thermal bridges occur in the tarpaulin at the points where the welding seams are located. The thermal bridges reduce the thermal insulating capability of the tarpaulin to significant degree.

US 2009/071904 A1 discloses a membrane cover structure comprising a top layer containing three plies. The top ply has UV stabilizers embedded therein; the bottom ply has stretch-resistant elements embedded therein; and the middle ply contains a coextruded polyvinylidene chloride barrier film for protecting the top ply against bio-gas infiltrations therein, In another aspect, the top and bottom plies containing polyethylene for protecting the middle ply from the weather and from corrosive environments under the membrane cover. In yet another aspect, the membrane cover structure has two foam layers affixed to the bottom ply. Each foam layer is made of juxtaposed strips of semi-rigid, closed-cell, polyethylene foam; wherein each strip in one foam layer is laid astride the adjoining edges of a pair of strips in the other foam layer. The strips of foam are bonded together and to the under surface of the bottom ply by strips of fused polyethylene.

The task to which the invention is directed is to indicate a PVC tarpaulin with improved thermal insulating capability. More specifically, the object is to find a solution by which the welding seams of the tarpaulin do not act as thermal bridges, and whereby the loss of heat caused by the passage of heat through the welding seam of the tarpaulin is thus avoided.

According to the invention, this is achieved by adapting the tarpaulin as indicated in the characterising part of claim 1.

The new feature of the invention is that the channels are welded in such a way that the channels partially overlap each other laterally, and such that the insulation material in the channels overlaps itself laterally as well. In this way, the insulation material will cover the welding seams. The result is that the welding seams in the tarpaulin are eliminated in a very simple and efficient way.

The tarpaulin is suitably composed of a continuous, i.e. an uncut synthetic canvas, at one side of which there are welded a number of closely lying, parallel synthetic tapes that partially overlap each other laterally and which form the closed channels in which the insulation material is embedded. This design makes it relatively simple to produce, i.e. weld, the tarpaulin simultaneously with putting the insulation material into the channels. The insulation material is usually glued to the synthetic canvas.

Alternatively, the tarpaulin can be composed of two layers of synthetic material, preferably synthetic film, which are welded together by a number of parallel welding seams, and where one layer of synthetic material constitutes a continuous, smooth canvas, and the other layer of synthetic material is folded in such a way that the said closed and mutually overlapping channels appear between these folds. Here, the welding technique is a bit different, but the embodiment is distinguished by implying a more rational handling of the film webs during the welding process when both sides of the tarpaulin consist of continuous webs of material. The unfolded side of the tarpaulin constitutes the top side of the tarpaulin.

In claims 5-7 are indicated some examples of various types of material, in particular types of synthetics, of which the tarpaulin according to the invention can be made with advantage. The choice of material obviously depends on the purpose for which the tarpaulin is to be used: cover for liquid manure tank, cover for asphalt transport, etc. Types of synthetics that can be thermally welded are preferred. Tarpaulins of the type made of a non-weldable fabric material may of course also be designed with mutually overlapping insulation channels according to the invention. In these cases, the various layers of material are joined by sewing in parallel seams, corresponding to the welding seams in the above mentioned synthetic tarpaulins.

The invention and particularly advantageous embodiments and details thereof are explained in more detail in the following with reference to the figures on the drawings.
Fig. 1 shows a liquid manure tank with double covering and reservoir for collecting biogas, shown in a vertical section with the gas reservoir in half-filled condition;
Fig. 2 shows the same liquid manure tank with the gas reservoir in completely filled condition;
Fig. 3 is an enlarged cross-section along the line A-A in Fig. 1, showing the structure of the tarpaulin with overlapping insulation channels in the upper tank covering; and
Fig. 4 is another example of a design of a tarpaulin with thermally insulating channel structure.

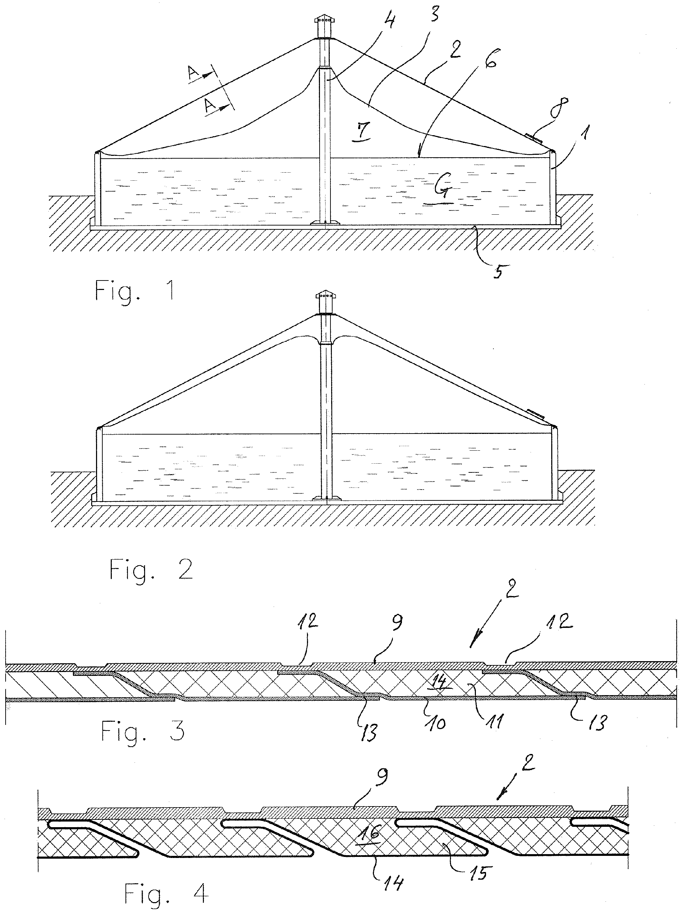

In the liquid manure tank shown in Figs. 1 and 2 of the drawing, the side elements of the tank are indicated by 1, the upper cover tarpaulin is denoted 2, the lower cover tarpaulin 3, the vertical support column of the tank 4, and the concreted bottom of the tank 5. Liquid manure is indicated by G.

The interspace between the surface 6 of the liquid manure and the lower cover tarpaulin 3 constitutes a closed gas reservoir 7 in which the biogas generated in the liquid manure tank is accumulated. The gas is generated by a biological fermentation process which is accelerated by heating the liquid manure.

In Fig. 1, the tank is shown with a loosely hanging lower tarpaulin 3, indicating that the gas reservoir 7 is only partially filled with biogas. During the continued gas development, the gas reservoir is completely filled while distending the lower cover tarpaulin 3 which thereby is pressed up against the underside of the upper cover tarpaulin 2, see Fig. 2. At the same time, the amount of air trapped between the upper cover tarpaulin 2 and the lower cover tarpaulin 3 is pressed out via a pressure relief valve 8 incorporated in the upper cover tarpaulin 2.

In order to economise with the heat supplied to the liquid manure, it is necessary to insulated the liquid manure tank as well as possible, including the cover 2 as well. For this purpose the upper cover tarpaulin 2 is made thermally insulating. This is achieved by adapting the tarpaulin with a system of closely lying, parallel channels in which a thermally insulating material is embedded, see Figs. 3 and 4.

In Fig. 3 is shown an enlarged detail of the upper cover tarpaulin 2 shown in cross-section along the line A-A in Fig. 1. It appears on the Figure how a number of parallel tapes 10 forming closely lying channels 11 that overlap each other laterally are welded on the underside of the upper layer of material 9 of the tarpaulin. The tapes 10 are almost overlapping such that each tape is welded to the underside of the material layer 9 along a first edge welding seam 12 as well as to the top side of the adjacent tape 10 along a second edge welding seam 13. The two edge welding seams are parallel and longitudinal. The closed channels 11, which in this way are conjointly delimited by the tapes 10 and the upper material layer 9, are filled with insulating material 14 that successively is laid into the channels during the welding process. It appears immediately from the drawing that the weldings 12 are covered by insulating material and therefor do not form thermal bridges in the tarpaulin. The insulation material 14 can advantageously be glued to the material layer 9 by means of an adhesive suited for the purpose.

In Fig. 4 is shown another embodiment of the tarpaulin where instead of tapes 10 there is used a continuous web 14 of synthetic film as the channel-forming layer. The web material 14 is folded and welded to the upper material layer 9 as seen on the drawing under formation of a system of closely lying and mutually overlapping channels 15. The channels are filled with insulating material 16. The drawing is otherwise not be commented further.

The material used for the thermally insulating tarpaulin is preferably PVC. However, other types of synthetics can be relevant, e.g. polyethylene, polypropylene and laminated film. As insulating material 14 is preferably used polyester fibres, but other fibrous or foamed types of material can be used as well.

As an alternative to the above mentioned tarpaulins which are made by thermal welding of different layers of synthetic canvas (plastic film and similar, e.g. net-reinforced synthetic material), it is also possible to make a tarpaulin according to the concept described here of traditional fabric material, and where stitchings are used instead of thermal weldings.

## Claims

1. A tarpaulin with insulating lining for covering of liquid manure tanks, consisting of two or more layers of synthetic material, e.g. PVS-film, which are welded or sewn together in a pattern under formation of a number of closely lying, parallel channels in which thermally insulation foam or fibre material is embedded, **characterised in that** the channels (11, 15) are welded or sewn in such a way that the channels partially overlap each other laterally, and such that the insulation material (14, 16) in the channels overlap itself as well.

2. Tarpaulin according to claim 1, **characterised in that** the tarpaulin is composed of a continuous, i.e. not cut-up synthetic canvas (9), at one side of which there are welded a number of closely lying, parallel synthetic tapes (10) that partially overlap each other laterally and which form the closed channels (11) in which the insulation material (14) is embedded.

3. Tarpaulin according to claim 1, **characterised by** being composed of two layers of synthetic material (9, 14), preferably synthetic film, which are welded together by a number of parallel welding seams, and where one layer of synthetic material constitutes a continuous, smooth canvas, and the other layer of synthetic material is folded in such a way that the said closed and mutually overlapping channels (15) appear between these folds.

4. Tarpaulin according to claim 2 or 3, **characterised in that** the continuous synthetic canvas (9) constitutes the outer side of the tarpaulin.

5. Tarpaulin according to claim 1 - 4, **characterised by** mainly being made of PVC-film or other synthetic material suited for the purpose, e.g. polypropylene film, polyethylene film or a laminated film.

6. Tarpaulin according to claim 1 - 5, **characterised in that** that the synthetic canvas used for the tarpaulin is of a type which can be welded by thermal welding.

7. Tarpaulin according to claim 1 - 6, **characterised in that** the lining (14, 16) consists of polyester fibres or other insulation material suited for the purpose, e.g. of foamed synthetics, and that the lining is fastened to the synthetic canvas (9) by gluing.

8. Tarpaulin according to claim 1, **characterised in that** the tarpaulin is made of a suitable textile material, and that stitchings are used instead of thermal weldings.

## Patentansprüche

1. Plane mit isolierender Auskleidung zum Bedecken von Flüssigdüngertanks, bestehend aus zwei oder mehreren Schichten aus synthetischem Material, wie z. B. PVS-Film, die in einem Muster unter Bildung einer Anzahl von eng liegenden, parallelen Kanälen zusammengeschweißt oder -genäht sind, in welche Wärmedämmstoff oder Fasermaterial eingebettet ist, **dadurch gekennzeichnet, dass** die Kanäle (11, 15) derart geschweißt oder genäht sind, dass sich die Kanäle teilweise lateral überlappen, und dadurch, dass sich das isolierende Material (14, 16) in den Kanälen selbst auch überlappt.

2. Plane nach Anspruch 1, **dadurch gekennzeichnet, dass** die Plane aus einer durchgehenden, d. h. nicht aufgeschnittenen, synthetischen Leinwand (9) besteht, an deren einer Seite eine Anzahl von eng liegenden, parallelen synthetischen Bändern (10) geschweißt ist, die sich teilweise lateral überlappen und welche die geschlossenen Kanäle (11) bilden, in welche das Isoliermaterial (14) eingebettet ist.

3. Plane nach Anspruch 1, **gekennzeichnet dadurch, dass** sie aus zwei Lagen aus synthetischem Material (9, 14) besteht, vorzugsweise aus synthetischer Folie, die mittels einer Anzahl von parallelen Schweißnähten zusammengeschweißt ist, wobei eine Schicht aus synthetischem Material eine durchgehende, glatte Leinwand bildet und die andere Schicht aus synthetischem Material derart gefaltet ist, dass die geschlossenen und einander überlappenden Kanäle (15) zwischen diesen Falten entstehen.

4. Plane nach Anspruch 2 oder 3, **dadurch gekennzeichnet, dass** die durchgehende synthetische Leinwand (9) die Außenseite der Plane bildet.

5. Plane nach einem der Ansprüche 1 bis 4, **gekennzeichnet dadurch, dass** diese hauptsächlich aus PVC-Film oder einem anderen synthetischen Material hergestellt ist, das sich zu diesem Zweck eignet, z. B. Polypropylenfilm, Polyethylenfilm oder aus einem laminierten Film.

6. Plane nach einem der Ansprüche 1 bis 5, **dadurch gekennzeichnet, dass** die synthetische Leinwand, die für die Plane verwendet wird, eines Typs ist, der durch Wärmeschweißen geschweißt werden kann.

7. Plane nach einem der Ansprüche 1 bis 6, **dadurch gekennzeichnet, dass** die Auskleidung (14, 16) aus Polyesterfasern oder einem anderen isolierenden Material für diesen Zweck besteht, z. B. aus Schaumstoffkunststoff, und dadurch, dass die Auskleidung durch Kleben an der synthetischen Leinwand (9) befestigt wird.

8. Plane nach Anspruch 1, **dadurch gekennzeichnet, dass** die Plane aus einem geeigneten Textilmaterial hergestellt ist, und dass Stiche anstelle von Wärmeschweißnähten verwendet werden.

## Revendications

1. Bâche pourvue d'une doublure isolante pour le recouvrement de fosses à purin, constituée de deux couches ou plus de matière synthétique, par exemple un film de PVS, qui sont soudées ou cousues ensemble selon un motif en formant plusieurs canaux proches les uns des autres, parallèles, dans lesquels une mousse ou une matière fibreuse d'isolation thermique est incluse, **caractérisée en ce que** les canaux (11, 15) sont soudés ou cousus de telle sorte que les canaux se recouvrent en partie latéralement les uns les autres, et de telle sorte que le matériau isolant (14, 16) présent dans les canaux se recouvre également lui-même.

2. Bâche selon la revendication 1, **caractérisée en ce que** la bâche se compose d'une toile synthétique continue, c.-à-d. non découpée (9), sur un côté de laquelle sont soudés plusieurs rubans synthétiques (10) proches les uns des autres, parallèles, qui se recouvrent en partie latéralement les uns les autres et qui forment les canaux fermés (11) dans lesquels le matériau isolant (14) est inclus.

3. Bâche selon la revendication 1, **caractérisée en ce qu'**elle se compose de deux couches de matière synthétique (9, 14), préférablement un film synthétique, qui sont soudées ensemble par plusieurs joints soudés parallèles, et dans laquelle une couche de matière synthétique forme une toile continue, lisse, et l'autre couche de matière synthétique est pliée de telle sorte que lesdits canaux fermés et se recouvrant mutuellement (15) apparaissent entre ces plis.

4. Bâche selon la revendication 2 ou 3, **caractérisée en ce que** la toile synthétique continue (9) forme le côté externe de la bâche.

5. Bâche selon les revendications 1 à 4, **caractérisée en ce qu'**elle se compose principalement d'un film de PVC ou d'une autre matière synthétique convenant à cette fin, par exemple un film de polypropylène, un film de polyéthylène ou un film stratifié.

6. Bâche selon les revendications 1 à 5, **caractérisée en ce que** la toile synthétique utilisée pour la bâche est d'un type qui peut être soudé par soudure thermique.

7. Bâche selon les revendications 1 à 6, **caractérisée en ce que** la doublure (14, 16) se compose de fibres de polyester ou d'un autre matériau isolant convenant à cette fin, par exemple des matériaux synthétiques transformés en mousse, et **en ce que** la doublure est fixée à la toile synthétique (9) par collage.

8. Bâche selon la revendication 1, **caractérisée en ce que** la bâche se compose d'une matière textile convenant à cette fin, et **en ce que** des coutures sont utilisées au lieu de soudures thermiques.
